# EUROPEAN PATENT APPLICATION

(11) **EP 4 741 176 A1**
(43) Date of publication of application: **13.05.2026**
(21) Application number: 25213810.2
(22) Date of filing: 05.11.2025
(51) Int. Cl.: B60B 1/00, B60B 1/02, B60B 1/04, B60B 1/14, B60B 21/06

(54) **RIM ASSEMBLY WITH ANTI-ROTATION SPOKE**

(30) Priority: 11.11.2024 CN 202422745201 U
(71) Applicant: Xiamen Carbonking Composites Technology Co., Ltd., Xiamen, Fujian 361022 (CN)
(72) Inventor: LIU, Wurui, Xiamen City, Fujian Province, 361022 (CN); XIAO, Peilong, Xiamen City, Fujian Province, 361022 (CN)
(74) Representative: Hofmann, Andreas

(57) **Abstract**

The present invention relates to the technical field of rim spokes, specifically disclosing a rim assembly with an anti-rotation spoke, including a spoke (1), where a first connector (2) is fixedly installed at one end of the spoke (1), the first connector (2) is configured to be installed in an accommodation groove (52) of a hub (5), the first connector (2) includes a first anti-rotation portion (22), and the first anti-rotation portion (22) is configured to limitatively engage with the accommodation groove (52) of the hub (5) to restrict the first connector (2) from rotating within the accommodation groove (52) of the hub (5). The present invention can prevent the spoke (1) installed between a rim (4) and the hub (5) from rotating, improving assembly stability, and ensuring that during bicycle riding, the narrow side of the spoke (1) always faces the riding direction, reducing riding wind resistance and ensuring riding safety.

## Description

### TECHNICAL FIELD

The present invention relates to the technical field of rim spokes, specifically to a rim assembly with an anti-rotation spoke.

### BACKGROUND ART

The spoke mechanism of an existing rim includes a spoke, and a nut cap and a cap head respectively fixedly installed at two ends of the spoke. The cap head connects one end of the spoke to a hub, and the nut cap passes through a spoke hole of the rim and cooperates with a matching nut to connect the other end of the spoke to the rim. However, the nut cap and the cap head mostly have a cylindrical bushing structure, and thus the nut cap and the cap head are likely to rotate at the assembly holes of the rim and the hub. This causes the entire spoke mechanism to easily rotate during bicycle riding, resulting in insufficient assembly stability. The narrow side of the spoke cannot always face the riding direction, increasing riding wind resistance and affecting riding safety.

### DISCLOSURE OF INVENTION

The present invention aims to provide a rim assembly with an anti-rotation spoke to solve the technical problems mentioned above.

To achieve the above purpose, the technical solution of the present invention is as follows: The rim assembly with an anti-rotation spoke includes a spoke, where a first connector is fixedly installed at one end of the spoke, the first connector is configured to be installed in an accommodation groove of a hub, the first connector includes a first anti-rotation portion, and the first anti-rotation portion is configured to limitatively engage with the accommodation groove of the hub to restrict the first connector from rotating within the accommodation groove of the hub.

Preferably, the first connector further includes a first bushing, and the first anti-rotation portion includes an annular expanded diameter portion disposed at an outer end of the first bushing and extending radially outward, and an anti-rotation protrusion disposed on one side of the annular expanded diameter portion.

Preferably, an extension direction of the anti-rotation protrusion is perpendicular to an axial direction of the first bushing, and right-angle cut surfaces are formed between two sides of the anti-rotation protrusion and the annular expanded diameter portion.

Preferably, a flat cut surface is formed on a side of the annular expanded diameter portion away from the anti-rotation protrusion.

Preferably, a second connector is fixedly installed at the other end of the spoke, the second connector includes a second bushing having an external thread and a second anti-rotation portion disposed at an inner end of the second bushing and having an elliptical shape, and the second anti-rotation portion is configured to be limitatively inserted into a spoke hole of a rim.

Preferably, the first connector is a cap head, the second connector is a nut cap, the spoke includes a main body and end heads located at two ends of the main body, the main body is flat, the end heads are conical end heads that are small inside and large outside, conical holes corresponding to the conical end heads are respectively provided inside the nut cap and the cap head, and the nut cap and the cap head are respectively fixedly installed on the conical end heads at two ends of the main body via the conical holes.

Preferably, the rim assembly further includes a rim and a hub, and two ends of the spoke are connected to the hub and the rim via the first connector and the second connector, respectively.

Preferably, an inner circumferential wall of the rim is provided with a plurality of spoke holes, a shape of the spoke hole is elliptical corresponding to a shape of the second anti-rotation portion, the second anti-rotation portion is limitatively inserted into the spoke hole of the rim, the hub is provided with a plurality of accommodation groove holes, the accommodation groove hole includes a lead-in hole and an accommodation groove located at an edge of the hub and communicating with the lead-in hole, and the first connector is led in through the lead-in hole and pulled back to enable the first anti-rotation portion to be limitatively installed in the accommodation groove.

Preferably, the second anti-rotation portion is limitatively inserted into the spoke hole of the rim in a fully hidden manner.

Preferably, the accommodation groove includes a first groove and a second groove sequentially arranged in a direction away from the lead-in hole, the first anti-rotation portion and the first bushing are respectively and correspondingly limitatively installed in the first groove and the second groove, the anti-rotation protrusion is limitatively clamped at a groove opening of the first groove, and the flat cut surface is limitatively clamped at a groove bottom of the first groove.

The present invention has the following beneficial effects:
The present invention includes a spoke, where a first connector is fixedly installed at one end of the spoke, the first connector is configured to be installed in an accommodation groove of a hub, the first connector includes a first anti-rotation portion, and the first anti-rotation portion is configured to limitatively engage with the accommodation groove of the hub to restrict the first connector from rotating within the accommodation groove of the hub. This prevents the spoke installed between the rim and the hub from rotating, improving assembly stability. This ensures that during bicycle riding, the narrow side of the spoke always faces the riding direction, reducing riding wind resistance and ensuring riding safety.

### BRIEF DESCRIPTION OF DRAWINGS

- FIG. 1: is a schematic structural diagram of a spoke mechanism from an angle according to an embodiment of the present invention;
- FIG. 2: is a schematic diagram of a first connector from an angle according to an embodiment of the present invention;
- FIG. 3: is a schematic diagram of the first connector from another angle according to an embodiment of the present invention;
- FIG. 4: is a schematic diagram of the first connector from another angle according to an embodiment of the present invention;
- FIG. 5: is a schematic structural diagram of a second connector according to an embodiment of the present invention;
- FIG. 6: is a schematic structural diagram of a spoke according to an embodiment of the present invention;
- FIG. 7: is a schematic structural diagram of a rim according to an embodiment of the present invention; and
- FIG. 8: is a schematic structural diagram of a hub according to an embodiment of the present invention.

In the drawings, the same reference signs indicate the same technical features, specifically:
- 1: spoke
- 11: main body
- 12: end head
- 2: first connector
- 21: first bushing
- 22: first anti-rotation portion
- 221: annular expanded diameter portion
- 222: anti-rotation protrusion
- 223: right-angle cut surface
- 224: flat cut surface
- 3: second connector
- 31: second bushing
- 32: second anti-rotation portion
- 4: rim
- 41: spoke hole
- 5: hub
- 51: lead-in hole
- 52: accommodation groove
- 521: first groove
- 522: second groove

### DESCRIPTION OF EMBODIMENTS

To further illustrate each embodiment, the present invention provides accompanying drawings. These drawings are a part of the disclosure content of the present invention, primarily used to illustrate embodiments, and can be used with the relevant description in the specification to explain the operating principles of the embodiments. With reference to these contents, those skilled in the art should be able to understand other possible implementations and the advantages of the present invention. Components in the drawings are not drawn to scale, and similar component symbols are typically used to represent similar components.

In the description of the present invention, unless otherwise specified, the meaning of "plurality of" is two or more; the terms "upper", "lower", "left", "right", "inner", "outer", "front end", "rear end", "head", "tail", and the like indicating orientation or positional relationships are based on the orientation or positional relationships shown in the drawings, solely for the convenience of describing the present invention and simplifying the description, rather than indicating or implying that the referred means or element must have a specific orientation, be constructed, and operate in a specific orientation, and thus should not be construed as a limitation of the present invention. Furthermore, the terms "first", "second", "third", and the like are used solely for descriptive purposes and should not be construed as indicating or implying relative importance.

In the description of the present invention, it should be noted that, unless otherwise explicitly specified and defined, the terms "join" and "connection" should be understood in a broad sense, for example, it can be a fixed connection, a detachable connection, or an integral connection; it can be a mechanical connection or an electrical connection; or it can be a direct connection or an indirect connection via an intermediate medium. For those skilled in the art, the specific meanings of the above terms in the present invention can be understood based on specific circumstances.

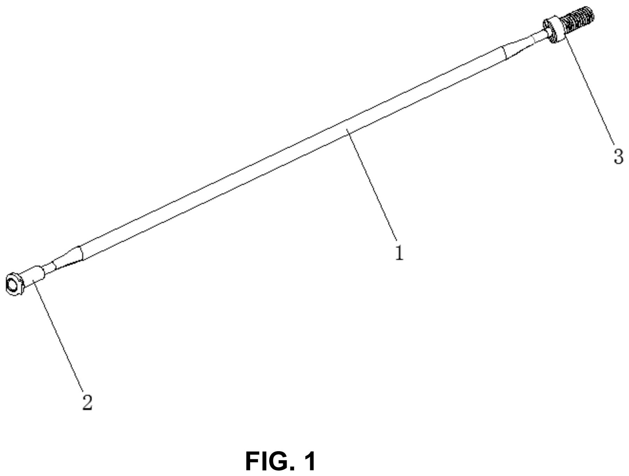

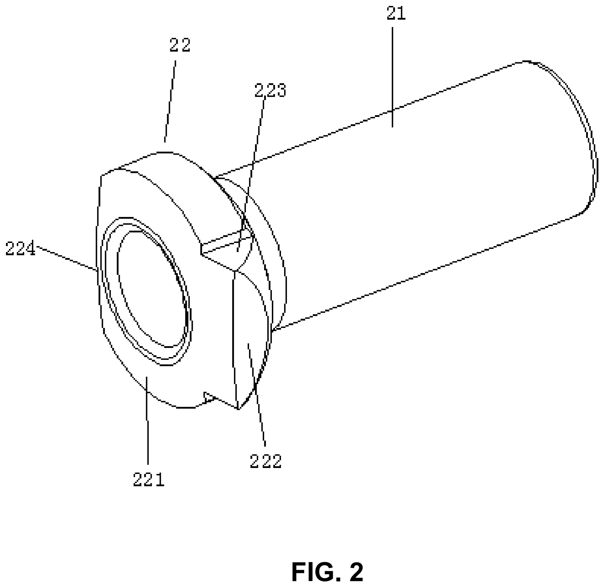

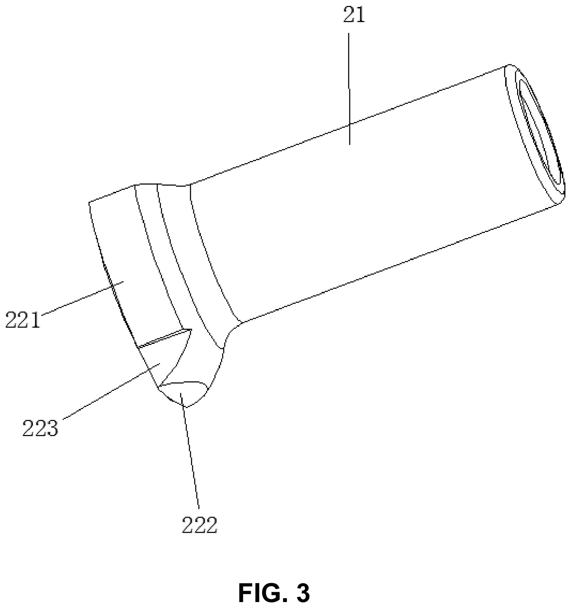

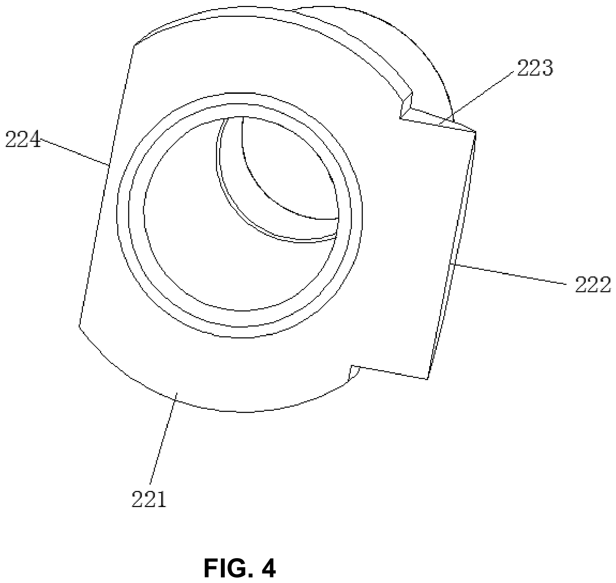

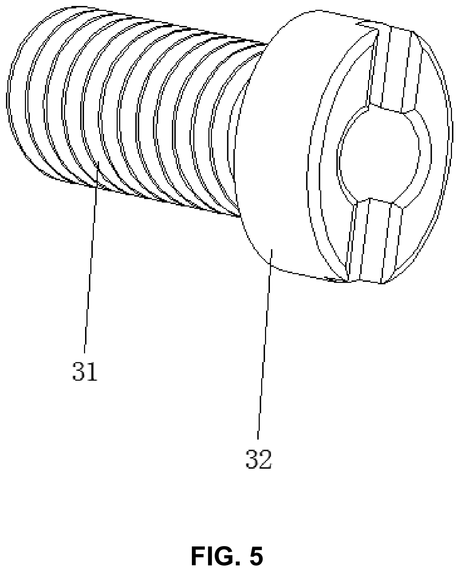

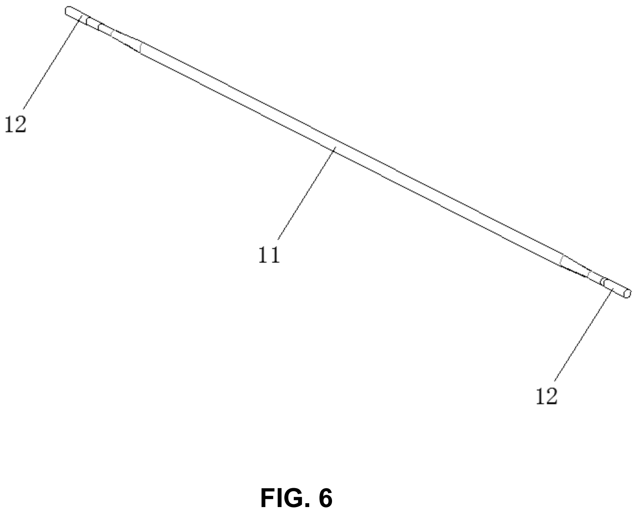

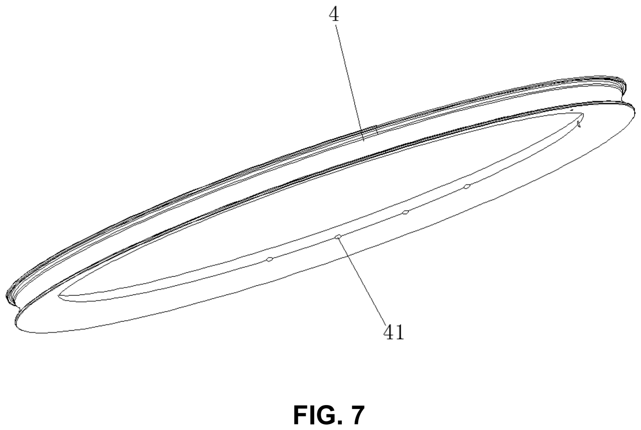

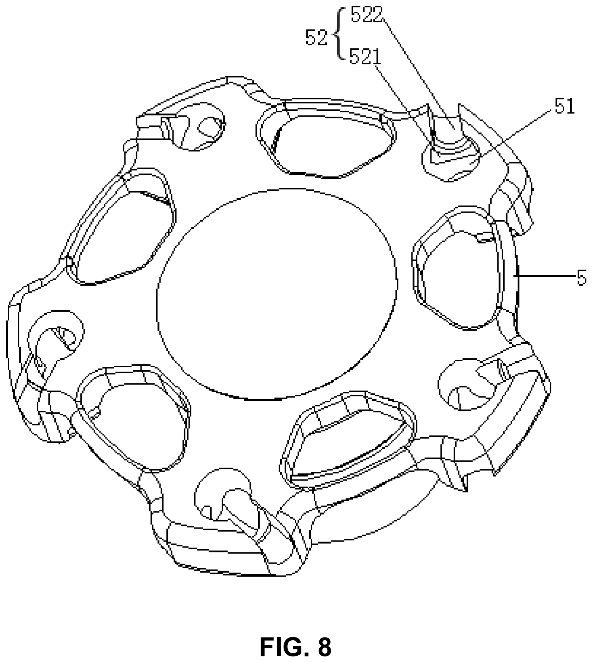

Referring to FIG. 1 to FIG. 8, as an embodiment of the present invention, a rim assembly with an anti-rotation spoke is provided, including a spoke 1, where a first connector 2 is fixedly installed at one end of the spoke 1, the first connector 2 is configured to be installed in an accommodation groove 52 of a hub 5, the first connector 2 includes a first anti-rotation portion 22, and the first anti-rotation portion 22 is configured to limitatively engage with the accommodation groove 52 of the hub 5 to restrict the first connector 2 from rotating within the accommodation groove 52 of the hub 5. This prevents the spoke installed between the rim and the hub from rotating, improving assembly stability. This ensures that during bicycle riding, the narrow side of the spoke 1 always faces the riding direction, reducing riding wind resistance and ensuring riding safety.

In this embodiment, the first connector 2 further includes a first bushing 21, and the first anti-rotation portion 22 includes an annular expanded diameter portion 221 disposed at an outer end of the first bushing 21 and extending radially outward, and an anti-rotation protrusion 222 disposed on one side of the annular expanded diameter portion 221.

In this embodiment, an extension direction of the anti-rotation protrusion 222 is perpendicular to an axial direction of the first bushing 21, and right-angle cut surfaces 223 are formed between two sides of the anti-rotation protrusion 222 and the annular expanded diameter portion 221, further enhancing anti-rotation limiting stability.

Certainly, in other cases, a smooth transition via an arc surface between the two sides of the anti-rotation protrusion and the annular expanded diameter portion is also feasible, thereby reducing friction between the first connector and the hub and prolonging the service life.

In this embodiment, a flat cut surface 224 is formed on a side of the annular expanded diameter portion 221 away from the anti-rotation protrusion 222, thereby achieving double anti-rotation limiting on both sides of the first connector 2.

In this embodiment, a second connector 3 is fixedly installed at the other end of the spoke 1, the second connector 3 includes a second bushing 31 having an external thread and a second anti-rotation portion 32 disposed at an inner end of the second bushing 31 and having an elliptical shape, and the second bushing 31 extends into the interior of a rim 4 through a spoke hole 41 and cooperates with a nut to connect the spoke 1 to the rim 4. The second anti-rotation portion 32 is configured to be limitatively inserted into the spoke hole 41 of the rim 4, and a shape of the spoke hole 41 is elliptical corresponding to a shape of the second anti-rotation portion 32, thereby preventing the second connector 3 from rotating within the spoke hole 41. The shape structure of the second anti-rotation portion 32 is easy to process and has good stability. Certainly, the second anti-rotation portion 32 can also be other shapes, as long as the shape of the spoke hole 41 corresponds to the shape of the second anti-rotation portion 32 to achieve the anti-rotation function of the second anti-rotation portion 32, such as a square shape.

In this embodiment, the first connector 2 is a cap head, the second connector 3 is a nut cap, and the spoke 1 is made of carbon fiber composite material, which has high strength and is light. The spoke 1 includes the main body 11 and the end heads 12 located at two ends of the main body 11. The main body 11 is flat, thereby reducing wind resistance. The end heads 12 are conical end heads that are small inside and large outside. Conical holes corresponding to the conical end heads are respectively provided inside the nut cap and the cap head, and the nut cap and the cap head are respectively fixedly installed on the conical end heads at two ends of the main body 11 via the conical holes. This forms a complete spoke mechanism. This spoke mechanism has high assembly stability, preventing the nut cap and the cap head from detaching from the two ends of the main body 11, and improving safety.

The rim assembly with an anti-rotation spoke in this embodiment further includes the rim and the hub, and two ends of the spoke are connected to the hub and the rim via the cap head and the nut cap, respectively. Specifically, an inner circumferential wall of the rim 4 is provided with a plurality of the spoke holes 41, and a shape of the spoke hole 41 is elliptical corresponding to a shape of the second anti-rotation portion 32. The second anti-rotation portion 32 is limitatively inserted into the spoke hole 41 of the rim 4. The hub 5 is provided with a plurality of accommodation groove holes, and the accommodation groove hole includes a lead-in hole 51 and the accommodation groove 52 located at an edge of the hub 5 and communicating with the lead-in hole 51. The cap head is led in through the lead-in hole 51 and pulled back to enable the first anti-rotation portion 22 to be limitatively installed in the accommodation groove 52. Specifically, the accommodation groove 52 includes a first groove 521 and a second groove 522 sequentially arranged in a direction away from the lead-in hole 51. The first anti-rotation portion 22 and the first bushing 21 are respectively and correspondingly limitatively installed in the first groove 521 and the second groove 522. A depth of the first groove 521 is greater than a depth of the second groove 522. A size of the lead-in hole 51 is larger than a size of the accommodation groove 52, enabling the cap head to be led in through the lead-in hole 51 and pulled back to be limitatively installed in the accommodation groove 52. The annular expanded diameter portion 221 is limitatively installed in the first groove 521. The anti-rotation protrusion 222 is limitatively clamped at a groove opening of the first groove 521, and the flat cut surface is limitatively clamped at a groove bottom of the first groove 521, thereby achieving double anti-rotation. This arrangement enables the nut cap and the cap head to be respectively limitatively assembled on the rim 4 and the hub 5 for anti-rotation. This prevents the spoke of the rim from rotating, improving assembly stability. This ensures that during bicycle riding, the narrow side of the spoke 1 always faces the riding direction, reducing riding wind resistance and ensuring riding safety.

In this embodiment, the second anti-rotation portion 32 is limitatively inserted into the spoke hole 41 of the rim 4 in a fully hidden manner, preventing the second anti-rotation portion 32 from being exposed outside the spoke hole 41, thus further reducing riding wind resistance, and under the premise of ensuring product performance and stability, the design weight of the product is light.

Although the present invention has been specifically shown and described with reference to preferred implementations, those skilled in the art should understand that various changes in form and detail made to the present invention, without departing from the spirit and scope of the present invention as defined by the appended claims, fall within the protection scope of the present invention.

## Claims

1. . A rim assembly with an anti-rotation spoke, **characterized by** comprising a spoke (1), wherein a first connector (2) is fixedly installed at one end of the spoke (1), the first connector (2) is configured to be installed in an accommodation groove (52) of a hub (5), the first connector (2) comprises a first anti-rotation portion (22), and the first anti-rotation portion (22) is configured to limitatively engage with the accommodation groove (52) of the hub (5) to restrict the first connector (2) from rotating within the accommodation groove (52) of the hub (5).

2. . The rim assembly with an anti-rotation spoke according to claim 1, **characterized in that** the first connector (2) further comprises a first bushing (21), the first anti-rotation portion (22) comprises an annular expanded diameter portion (221) disposed at an outer end of the first bushing (21) and extending radially outward, and an anti-rotation protrusion (222) disposed on one side of the annular expanded diameter portion (221).

3. . The rim assembly with an anti-rotation spoke according to claim 2, **characterized in that** an extension direction of the anti-rotation protrusion (222) is perpendicular to an axial direction of the first bushing (21), and right-angle cut surfaces (223) are formed between two sides of the anti-rotation protrusion (222) and the annular expanded diameter portion (221).

4. . The rim assembly with an anti-rotation spoke according to claim 2 or 3, **characterized in that** a flat cut surface (224) is formed on a side of the annular expanded diameter portion (221) away from the anti-rotation protrusion (222).

5. . The rim assembly with an anti-rotation spoke according to at least one of claims 1 to 4, **characterized in that** a second connector (3) is fixedly installed at the other end of the spoke (1), the second connector (3) comprises a second bushing (31) having an external thread and a second anti-rotation portion (32) disposed at an inner end of the second bushing (31) and having an elliptical shape, and the second anti-rotation portion (32) is configured to be limitatively inserted into a spoke hole (41) of a rim (4).

6. . The rim assembly with an anti-rotation spoke according to claim 5, **characterized in that** the first connector (2) is a cap head, the second connector (3) is a nut cap, the spoke (1) comprises a main body (11) and end heads (12) located at two ends of the main body (11), the main body (11) is flat, the end heads (12) are conical end heads that are small inside and large outside, conical holes corresponding to the conical end heads are respectively provided inside the nut cap and the cap head, and the nut cap and the cap head are respectively fixedly installed on the conical end heads at two ends of the main body (11) via the conical holes.

7. . The rim assembly with an anti-rotation spoke according to claim 5 or 6, **characterized in that** two ends of the spoke (1) are connected to the hub (5) and the rim (4) via the first connector (2) and the second connector (3), respectively.

8. . The rim assembly with an anti-rotation spoke according to claim 7, **characterized in that** an inner circumferential wall of the rim (4) is provided with a plurality of spoke holes (41), a shape of the spoke hole (41) is elliptical corresponding to a shape of the second anti-rotation portion (32), the second anti-rotation portion (32) is limitatively inserted into the spoke hole (41) of the rim (4), the hub (5) is provided with a plurality of accommodation groove holes, the accommodation groove hole comprises a lead-in hole (51) and the accommodation groove (52) located at an edge of the hub (5) and communicating with the lead-in hole (51), and the first connector (2) is led in through the lead-in hole (51) and pulled back to enable the first anti-rotation portion (22) to be limitatively installed in the accommodation groove (52).

9. . The rim assembly with an anti-rotation spoke according to claim 8, **characterized in that** the accommodation groove (52) comprises a first groove (521) and a second groove (522) sequentially arranged in a direction away from the lead-in hole (51), the first anti-rotation portion (22) and the first bushing (21) are respectively and correspondingly limitatively installed in the first groove (521) and the second groove (522), the anti-rotation protrusion (222) is limitatively clamped at a groove opening of the first groove (521), and the flat cut surface (224) is limitatively clamped at a groove bottom of the first groove (521).

10. . The rim assembly with an anti-rotation spoke according to at least one of claims 7 to 9, **characterized in that** the second anti-rotation portion (32) is limitatively inserted into the spoke hole (41) of the rim (4) in a fully hidden manner.
